Europäisches Patentamt

European Patent Office

Office européen des brevets

(11) Publication number: **0 063 454**
**B1**

(12) **EUROPEAN PATENT SPECIFICATION**

(45) Date of publication of patent specification: **09.08.89**

(21) Application number: **82301857.7**

(22) Date of filing: **08.04.82**

(51) Int. Cl.⁴: **G 06 K 9/78**

(54) Method for recognizing machine encoded characters.

(30) Priority: **16.04.81 US 254838**

(43) Date of publication of application:
**27.10.82 Bulletin 82/43**

(45) Publication of the grant of the patent:
**09.08.89 Bulletin 89/32**

(84) Designated Contracting States:
**DE FR GB**

(56) References cited:
**EP-A-0 014 758**
**US-A-3 725 862**
**US-A-4 204 193**

(73) Proprietor: **NCR CANADA LTD - NCR CANADA LTEE**
**6865 Century Avenue**
**Mississauga Ontario, L5N 2E2 (CA)**

(72) Inventor: **Grabowski, John Stanley**
**340 Weber Street West**
**Kitchener Ontario N2H 4B2 (CA)**
Inventor: **Shiau, Chin-Chih**
**19 Longmeadow Road**
**Chelmsford Massachusetts 01824 (US)**
Inventor: **Latala, John Richard**
**627 Silverbirch Road, No. 10**
**Waterloo Ontario N2L 4R4 (CA)**

(74) Representative: **Robinson, Robert George**
**International Patent Department NCR Limited**
**206 Marylebone Road**
**London NW1 6LY (GB)**

Courier Press, Leamington Spa, England.

# EP 0 063 454 B1

**Description**

**Technical field**

This invention relates to a method for recognizing machine encoded characters. More particularly the invention relates to a method for optically reading and determining machine encoded characters printed on a document such as, for example, a bank cheque.

**Background Art**

Optical character recognition of machine encoded characters may be difficult in respect of documents which have within a scan band additional matters such as backgrounds, bank teller stamps or customer signatures. When no optically clear band exists on a document, additional matter as mentioned above may give rise to rejected, misread or extra characters (blank character locations being interpreted as data).

Optical character recognition of a machine encoded character font for which no optical standard exists, such as the E13B Magnetic Ink Character Recognition (MICR) font, is a difficult process. In sensing such a font, because of the lack of an Optical Character Recognition (OCR) standard, foreign signals may be produced, due, for example, to sensing of customers' signatures, bank tellers stamps, scenic cheque backgrounds, etc. Such foreign signals, which are produced together with signals representing E13B MICR characters, may result in increased character rejects and misreads. Precise location of the E13B MICR characters within the scan band is a difficult but very important for any optical character recognition scheme. Characters not precisely located can be rejected or misread due to background in the scan band.

In U.S. Patent No. 3,882,463, for example, there is disclosed an optical character recognition method in which an area of a printed document to be read is scanned to produce digitized data and said digitized data is stored. A character stored in digitized form is recognized by comparing it with each member of a set of masks corresponding to a set of characters. Additional mask elements are provided and selected to fit with background areas, and even though a character may be a fit with a character mask, it may be rejected if black elements are present in the character background. A problem experienced with this known method is that an unacceptably high proportion of characters may be rejected due to the presence of extraneous matter in the background of the characters being read.

A method for optically reading and determining machine encoded characters in an optically contaminated scan band is known from EP—A—0014758. This known method involves scanning an area of the printed document to be read to produce digitized data and storing the digitized data, and includes the steps of analyzing the stored digitized data in order to find potential characters, determining and storing a reference location in respect of each potential character found, analyzing the stored reference locations in order to predict the probable reference locations of additional potential characters, and performing a character recognition process in order to determine if possible the machine encoded character for each such reference location.

**Disclosure of the Invention**

It is an object of the present invention to provide an improved method for optically reading and determining machine encoded characters in an optically contaminated scan band which is simple and in which a high proportion of characters are correctly recognized despite the presence of extraneous matter in the background of the characters.

According to the invention there is provided a method for optically reading and determining machine encoded characters from a printed document in which an area of said printed document to be read is scanned to produce digitized data and said digitized data is stored, the method including the steps of analyzing the stored digitized data in order to find potential characters located in a predetermined scan band and determining and storing a reference location in respect of each potential character found, and performing a character recognition process in respect of each such reference location in order to determine if possible the machine encoded character for that reference location, characterized by the steps of analyzing the stored reference locations in order to predict the probable reference locations of any additional characters including blanks, and performing a second character recognition process in order to determine if possible the machine encoded character for any predicted storage location, and further characterized in that each character recognition process includes the steps of: a) storing digitized data representing a potential character in a data storage matrix having a storage capacity greater than the storage capacity required to store a character; b) comparing digitized data stored in the first portion of said data storage matrix with one of a first set of prestored masks which respectively correspond to possible characters and each of which in indicative of non-significant elements of the respective character, in order to determine elements of the digitized data within said first portion of said data storage matrix which are of interest; c) comparing elements determined to be of interest in step b) with an associated one of a second set of prestored masks, which comprise digitized data representing character and non-character elements and which respectively represent possible characters, and determining the number of mismatched elements; d) storing the number of mismatched elements; e) repeating steps b) to d) inclusive for successive different portions of said data storage matrix until the total storage capacity of said data storage matrix has been covered; f) repeating steps b) to e) inclusive for different masks until all the prestored masks have been utilized; and g) determining the machine encoded character by analyzing the stored

2

numbers of mismatched elements, step g) involving determining the lowest number of mismatched elements found for each mask, determining which of these lowest numbers is the minimum number and the next minimum number, and determining whether said minimum number is less than a first preset value and whether the difference between said minimum number and said next minimum number exceeds a second preset value, each of said minimum number and said next minimum number having one of two possible values dependent whether step g) forms part of a first character recognition process or a subsequently performed character recognition process carried out in respect of reference locations predicted as a result of an analysis of the originally stored reference locations.

Brief Description of the Drawings

One embodiment of the invention will now be described by way of example with reference to the accompanying drawings, by which:

Fig. 1 is a block diagram of an optical character recognition system;

Fig. 2 is a functional flow diagram explaining the operation of the optical character recognition system of Fig. 1;

Fig. 3 shows a sample X—Y start coordinate table which might be generated by a character finding algorithm utilized in the character reading and determining method described with reference to the drawings;

Fig. 4 is a version of the X—Y start coordinate table of Fig. 3 after an editing function has been performed;

Fig. 5 is a diagram explaining the results of successive steps in the method described;

Fig. 6 shows the organizing of a working memory of the character recognition system of Fig. 1;

Fig. 7 shows an 18-bit wide by 22-bit high matrix within the working memory of the character recognition system of Fig. 1;

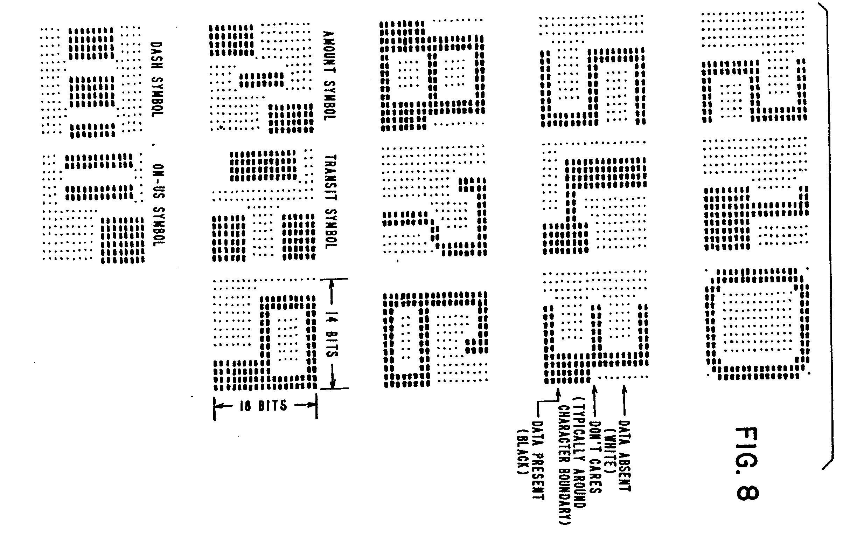

Fig. 8 shows the E13B font character templates utilized in the method described;

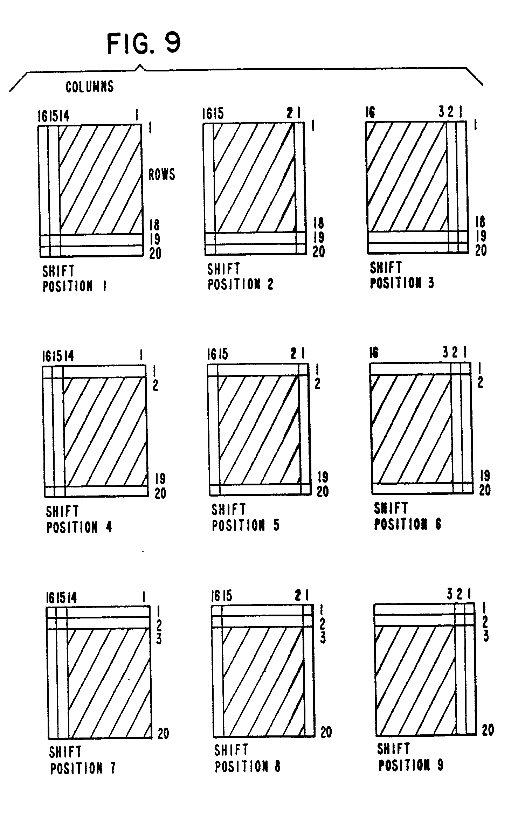

Fig. 9 shows a number of shift positions of a template as shown in Fig. 8; and

Fig. 10 is a diagram explaining a character recognition process of the method described.

Best Mode for Carrying Out the Invention

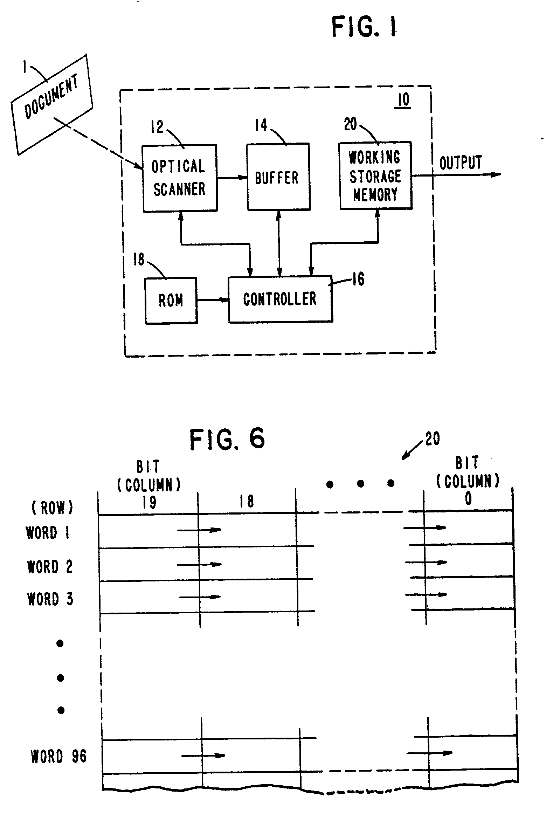

Referring to Fig. 1, the optical character recognition system 10 shown therein includes an optical scanner 12 which is coupled to a buffer 14, the optical scanner 12 being under the control of a controller 16. The buffer 14, which is also coupled to the controller 16, is at least sufficiently large to store digitized data representative of an entire optical scan of a document 1 read by the scanner 12, the document 1 having a machine encoded character font within the optical scan area. The controller 16 is further coupled to a read only memory 18, which stores control firmware, masks, algorithms, etc. utilized by a system 10, and to a working storage memory 20 for storing the digitized data utilized by the algorithms for determining the characters, and for storing intermediate and final results. The output of the working memory 20 forms the output of the system 10, the memory 20 containing a digital representation indicative of the characters read from the document 1. The controller 16 contains registers, control circuitry, and an arithmetic and logic unit as required to perform the steps required by character finding and character recognition algorithms. The controller 16 may be a control processing unit or microprocessor known in the art and is not discussed further herein.

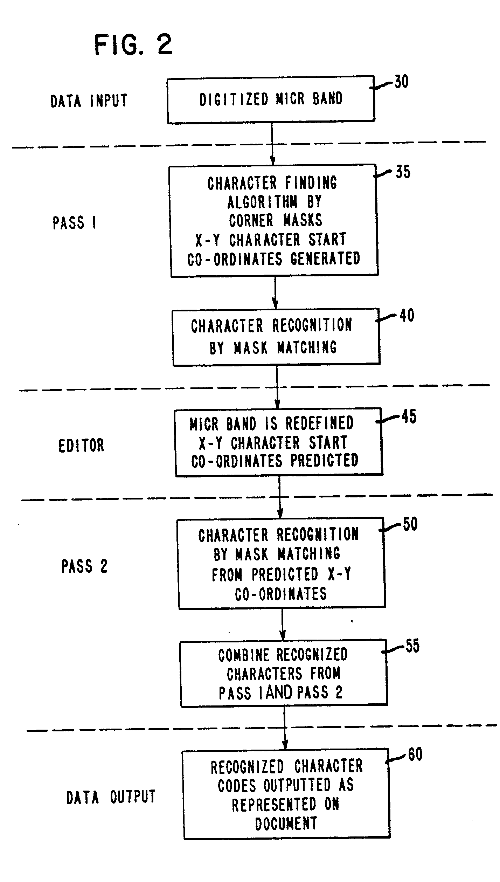

The character reading and determining method in accordance with the invention will now be described. Referring first to Fig. 1 and the flow diagram of Fig. 2, the document 1 containing the characters to be read is introduced into the system 10 via a document transport mechanism (not shown) which places the document 1 in a position to be read by the optical scanner 12. Any type optical scanner 12 well known in the art can be used in which the output data from the optical scanner 12 may be serially fed column-wide into a register. In the preferred embodiment, the system 10 is designed to process an E13B MICR optical scan band 96-bits high and 1348-bits wide based in a scanning resolution of 61 pixels per centimetre (i.e., a scan band about 1.6 centimetres high and about 22 centimetres long). The digitized data for the entire scan band of the document 1 is stored in the buffer 14, this step comprising the data input step (block 30 of Fig. 2).

After all the data has been inputted, the character finding algorithms is initiated (block 35). X—Y character start coordinates (serving as a reference location) are determined for each potential E13B character found, and are stored in the working memory 20. These X—Y start coordinates become the character start or reference position of the top right hand corner of the potential character that has been located. When a potential E13B character has been located, a first character recognition process is initiated in respect of the potential character (block 40). The character recognition takes place by first establishing in a working matrix in the memory 20 a data block 16 elements wide by 20 elements in which is obtained from the buffer 14 and which is identified by the X—Y character finding step. The coordinates of the corners of the data block are X, X+15, Y, Y+19. The data block is then used for the character recognition process, discussed in more detail later. The blocks 35 and 40 comprise Pass 1.

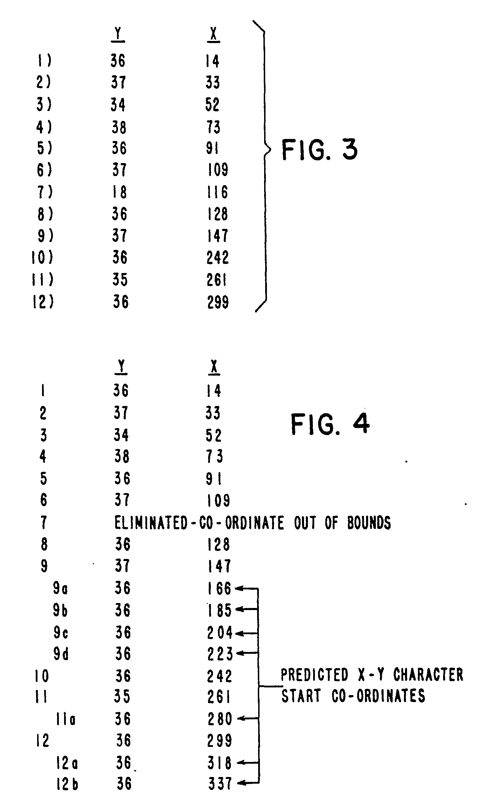

An editing function (block 45) is then preformed by taking the X—Y start coordinates stored in the working memory 20 and more accurately defining the E13B band. This is done by taking the Y start coordinates, determining the most frequent Y values (Y1) and then eliminating any coordinate whose

3

values do not fall into the range Y1 ± D (block 45). The value of D is determined by taking into consideration the amount of document skew that will be found in the transport mechanism, as well as variations in the printing of the E13B characters (notably, the vertical misalignment), the preferred method utilizing D having the value of eight (8). By way of illustrating the editing function, reference is made to Figs. 3 and 4. Fig. 3 is a sample of an X—Y start coordinate table which might be generated by the character finding algorithm. In the example set forth in Fig 3, the most frequent occurrence of Y is 38. Thus the range of allowable Y values lies between 28 and 44, thereby eliminating the 7th Y coordinate in the table (Y coordinate 18). The potential character having Y coordinate 18 is a misread (a noisy document background image being mistaken as an E13B character). By analyzing the X—Y start coordinate remaining in Fig. 3 with regard to character pitch, line skew, etc., the editing function then predicts where aditional potential E13B characters can be located by assigning X—Y character start coordinates to gaps in the buffer table. Fig. 4, the complete edited version of the X—Y coordinate table of Figs. 3, shows gaps (with reference to the X coordinates) between coordinates 9 and 10, betweem 11 and 12, and after 12. (In this example the X boundary ends at coordinate X=360).

It will be recognized by those skilled in the art that the editing function may be achieved in a variety of ways. For example, the editing function can be done on a document basis, or the document may be segmented into fields with the X—Y cordinates associated within each field treated separately. Treating the document by segments has advantages when the E13B characters are printed at different times. This approach can compensate for any difference in the vertical positions between the fields printed at different times.

Referring again to Fig. 2, Pass 2 then takes each of the predicted X—Y character start coordinates generated by the edit step, establishes in the working memory 20 a 16 × 20 data block obtained from the buffer 14 and identified by the predicted start coordinates, and performs a second character recognition process to determine if possible an E13B character or "blank" condition (block 50). The character recognition algorithm will be described in detail later. The controller 16 then performs a second editing function combining the recognized characters from Pass 1 and Pass 2 in sequence as they appear on the document image (block 55). The output data, which is a digital representation of the characters read from the document, is then outputted (block 60) or made available to a subsequent processor or user. Thus, the two pass character recognition technique needs only a relatively simple character finding algorithm, since in Pass 1 character finding is based on locating relatively easily recognizable characters. In Pass 2, no time need be wasted looking at areas of the scan band where no E13B characters were initially found since the X—Y start coordinates of the characters have already been accurately predicted.

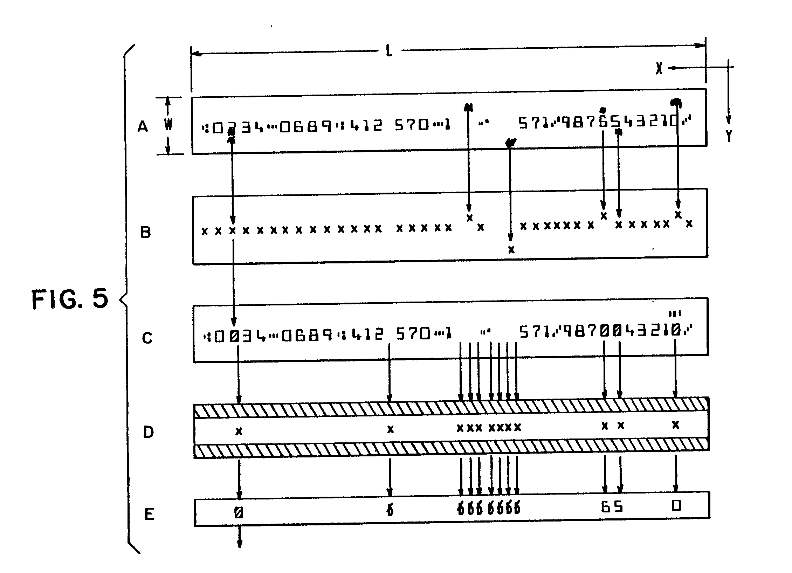

Fig. 5 summarizes the results of the steps of the optical character reading and determining method. Fig. 5A shows the original scan band having a length L and a width W which also includes some extraneous matter. (In the preferred embodiment, the value of L is 22 centrimetres maximum, and the value of W is 1.6 centimetres.) Fig. 5B indicates potential E13B characters as located by the character finding algorithm. Fig. 5C shows the characters recognized after Pass 1, the symbol signifying a rejected character. Fig. 5D depicts the revised E13B band with the predicted X—Y character start coordinates for additional potential characters not previously found or determined, for use in Pass 2. Figs. 5E shows the characters recognized in Pass 2, the symbols ƀ indicating blanks on the document. Handling of any rejected characters remaining after Pass 2, such as the left-most "2" character, can be performed in a number of ways. The operator of the system 10 could input the correct character from the document, or from a screen which would display the particular character. Input/output devices for implementing this approach, and devices for implementing alternative manual input corrective schemes are not shown in system 10 and will not be discussed further herein as such discussion is not necessary for understanding the present invention. Fig. 5A indicates the X—Y coordinate system utilized by the described method.

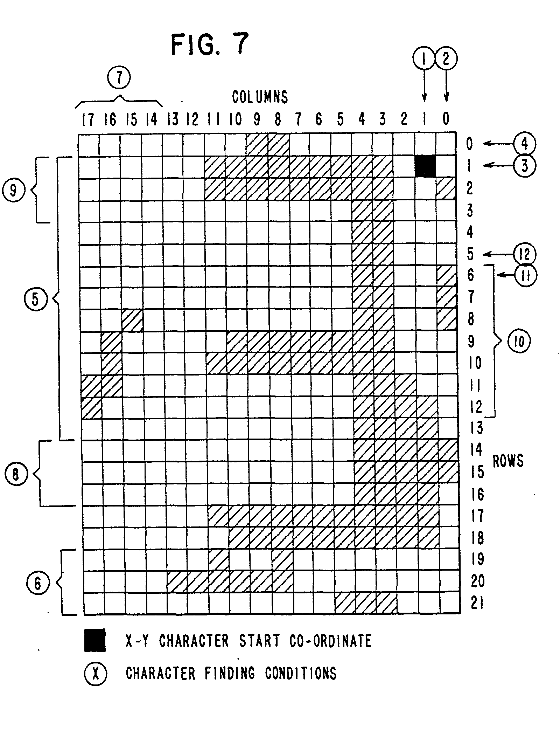

The character finding technique used to precisely locate potential E13B characters will now be described. The working memory 20 of the preferred embodiment consists of five 256 × 4 random access memories organized as a recirculating shift register, The optical scan band data stored in the buffer 14 is transferred to the working memory 20 on a column basis, the memory 20 being organized as a two-dimensional matrix to contain a 96 bit high (corresponding to the height of the optical scan area) by 20 bit wide working buffer. The working memory 20 is organized as shown in Fig. 6. The working memory 20 is first filled and then continually updated by column. The memory 20 is updated by fetching the next column of 96-bit data storing that data in the column 19 of the memory 20, the data already contained therein being shifted such that bits in column 19 shift to column 18 (i.e. the bit in column 19 word shifts column 18 word 1, the bit in column 19 word 2 shifts to column 18 word 2, ... and the bits in column 19 word 96 shifts to column 18 word 96), bits in column 18 shifts to column 17, etc. The character finding algorithm continually monitors an 18-bit wide by 22-bit high matrix within the working memory 20 and looks at twelve possible conditions, to determine whether a potential E13B character has been located. The twelve conditions are

EP 0 063 454 B1

described in Table 1 below. The character finding conditions related to the 18 × 22-bit matrix are shown in Fig. 7.

TABLE 1

| Condition Number | Conditions Description |
| --- | --- |
| 1 | Column 1 contains at least 5 consecutive blacks |
| 2 | Column 0 does not contain at least 5 consecutive blacks |
| 3 | Row 1 contains at least 3 consecutive blacks |
| 4 | Row 0 does not contain at least 3 consecutive blacks |
| 5 | Each row 1 to 13 (inclusive) contains at least one black |
| 6 | Any of rows 19 to 21 does not contain 2 or more consecutive blacks |
| 7 | Any of rows 14 to 17 does not contain 2 or more consecutive blacks |
| 8 | Any of rows 14 to 16 does not contain 2 or more consecutive blacks |
| 9 | Any of rows 1 to 3 does not contain 2 or more consecutive blacks |
| 10 | Each of row 6 to 12 contains at least one black |
| 11 | Row 6 contains at least 3 consecutive blacks |
| 12 | Row 5 does not contain at least 3 consecutive blacks |

Conditions 1 to 7 are used to located all E13B characters with the exception of the dash symbols. All conditions 1 to 7 have to be true. Conditions 1 and 2 are used to locate the transition to the top edge of the character. Conditions 3 and 4 are used to locate the transition to the right edge of the character. Condition 5 determines that the character is not physically broken. Condition 6 locates a white boundary to the bottom of the character. Condition 7 locates a white boundary to the left of the character. This maintains the condition that characters are physically separated.

Conditions 6 to 12 (when all conditions are true) are used to locate the dash symbol. Conditions 8 and 9 locate a white boundary above and below the dash symbol. This prevents false triggering of the dash symbol when strong document backgrounds revail in the scan band. Condition 10 maintains that the dash symbol is not physically broken. Condition 11 and 12 locates the transition to the top edge of the dash symbol.

As data is generated by the character finding algorithm, an X—Y coordinate generator is updated. The X—Y coordinate generator is a storage location of the memory 20 where the X—Y start coordinates of a potential character are stored. These X—Y coordinates represent the character start position of the located potential character, corresponding to the top right hand corner of this character (intersection of column 1 and row 1 of the character finding matrix).

The character recognition algorithm, which will now be described, utilizes a mask (template) matching technique. Each template comprises digitized data representing black (character elements), white (non-character elements) and don't care (non-significant) elements (ambigious areas of a character, notably around the character boundaries where a black/white decision is difficult, due to printing and scanning character imperfections). Fig, 8 shows the E13N font character templates (masks) of the preferred embodiment based in a scanning resolution it 61 pixels per centimetres.

Each data block representing a potential character is set to reside in a data storage matrix 16 bits wide by 20 bits high. Each of the 14 E13B templates (one per each E13B character) resides in a matrix 28 bits wide by 18 bits high. Each character template (28 × 18) is actually composed of two sub-templates, each (14 × 18) such that each subtemplate can be shifted over nine positions as shown in Fig, 9 vertical by 3 horizontal) of the data storage matrix to obtain a best fit, the shaded portion being the 14 × 18 bit matrix of the subtemplates. One subtemplate contains the black/white states, the other subtemplates contains the don't care states. For each of the nine shift positions, the (14 × 18) don't care state subtemplate is first compared to the data storage matrix to determine which bits of the data storage matrix become don't cares. These don't care bits are then ignored and the remaining bits of the data storage matrix are then compared to the (14 × 18) black/white state subtemplate to determine the total number of mismatched bits (elements). In addition, for shift positions 2, 5 and 8 the number of black bits which reside in column 1 of the data storage matrix (which column is not being compared) are added to the respective total mismatch count of each shift position. For shift positions 3, 6 and 9, the numbers of black elements in columns 1 and 2

5

are added to the respective totals. This is done to prevent misreads. Thus each pair of character subtemplates will generate nine totals, each total corresponding to the total number of mismatched elements for one shift position.

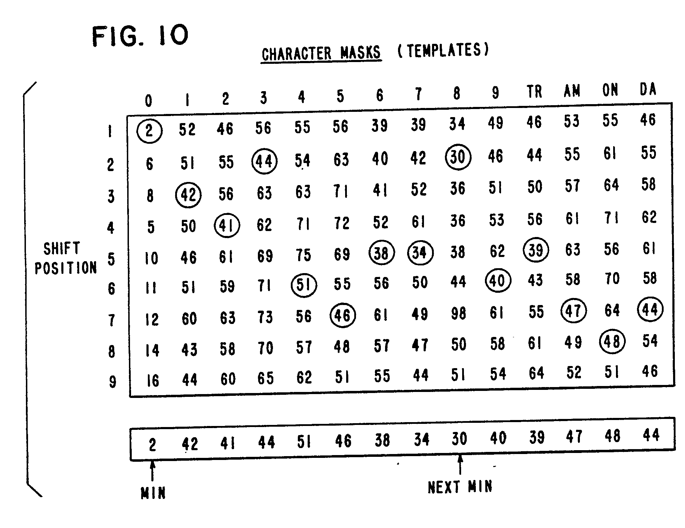

The character recognition process of Pass 1 or Pass 2 will be described with reference to a particular example as illustrated in Fig. 10. The fourteen (14) E13B character templates are compared to a potential character, TR representing the transmit character, AM representing the amount character, ON representing the ON-US character, and DA representing the dash character. For each character template, nine totals are generated, one for each shift position. Each total is the total number of mismatched elements between the character template and the data storage matrix, Fig. 10 showing the totals. The minimum of the nine totals is found and stored for each character template, thereby generating 14 numbers (shown ringed in Fig. 10). The minimum and next minimum values of these 14 numbers are then determined, the numbers being 2 and 30 as indicated by the arrows in Fig. 10. Finally, if the minimum value is less than a first preset value (XI), and the difference between the minimum and next minimum value exceeds a second preset value (X2), then the character which had the minimum value becomes the recognized character.

Thus, in the example illustrated in Fig. 10

MIN 1 (minimum value) = 2

MIN 2 (next minimum value) = 30.

In the preferred embodiment the values of X1 and X2 are set at 36 and 8 respectively for Pass 1, and at 48 and 9 respectively for Pass 2. (In Pass 1, since the entire scan band is being processed, the values of X1 and X2 are set to prevent false recognition and thereby erroneous XY character start coordinates. In Pass 2, the values of X1 and X2 are raised since the scan band search has been considerably narrowed.) Hence, since MIN 1 is less than 48 and MIN2-MIM1 is greater than 9, the character is recognized as the E13B character "0". If the above criteria are not met then the potential character is considered a reject.

Although the above process describes an essentially sequential operation, it will be recognized by those skilled in the art that variations may exist within the true scope of the invention. One such variation includes overlapping the optical scanner 12 read and buffer 14 writing with the character finding algorithm processing.

## Claims

1. A method for optically reading and determining machine encoded characters from a printed document in which an area of said printed document to be read is scanned to produce digitized data and said digitized data is stored, the method including the steps of analyzing the stored digitized data in order to find potential characters located in a predetermined scan band and determining and storing a reference location in respect of each potential character found, and performing a character recognition process in respect of each such reference location in order to determine if possible the machine encoded character for that reference location, characterized by the steps of analyzing the stored reference locations in order to predict the probable reference locations of any additional characters including blanks, and performing a second character recognition process in order to determine if possible the machine encoded character for any predicted storage location, and further characterized in that each character recognition process includes the steps of: a) storing digitized data representing a potential character in a data storage matrix having a storage capacity greater than the storage capacity required to store a character; b) comparing digitized data stored in the first position of said data storage matrix with one of a first set of prestored masks which respectively correspond to possible characters and each of which in indicative of non-significant elements of the respective character, in order to determine elements of the digitized data within said first portion of said data storage matrix which are interest; c) comparing elements determined to be of interest in step b) with an associated one of a second set of prestored masks, which comprise digitized data representing character and non-character elements and which respectively represent possible characters, and determining the number of mismatched elements; d) storing the number of mismatched elements; e) repeating steps b) to d) inclusive for successive differerent portions of said data storage matrix until the total storage capacity of said data storage matrix has been covered; f) repeating steps b) to e) inclusive for different masks until all the prestored masks have been utilized; and g) determining the machine encoded character by analyzing the stored numbers of mismatched elements, step g) involving determining the lowest number of mismatched elements found for each mask, determining which of these lowest numbers is the minimum number and the next minimum number, and determining whether said minimum number is less than a first preset value and whether the difference between said minimum number and said next minimum number exceeds a second present value, each of said minimum number and said next minimum number having one or two possible values dependent whether step g) forms part of a first character recognition process or a subsequetly performed character recognition process carried out in respect of reference locations predicted as a result of an analysis of the originally stored reference locations.

2. A method according to claim 1, characterized in that the step of analyzing the stored digitized data involves successively monitoring different portions of the stored digitized data in order to ascertain whether a predetermined set of conditions are satisfied, a reference location being stored each time said predetermined set of conditions are satisfied.

6

**Patentansprüche**

1. Verfahren zum optischen Lesen und Bestimmen maschinenkodierter Zeichem von einem gedruckten Dokument, bei dem ein Bereich des zu lesenden gedruckten Dokuments abgetastet wird, um digitalisierte Daten zu erzeugen, und die digitalisierten Daten gespeichert werden, wobei das Verfahren die Schritte einschließt: Analysieren der gespeicherten digitalisierten Daten, um in Frage kommended Zeichen zu finden, die sich in einem vorbestimmten Abtastband befinden und um eine Bezugsposition bezüglich jedes gefundenen in Frage kommenden Zeichens zu bestimmen und zu speichern, und Durchführen eines Zeichenerkennungsvorgangs bezüglich jeder derartigen Bezugsposition um, wenn möglich, daß maschinekodierte Zeichen für diese Bezugposition zu bestimmen, gekennzeichnet durch die Schritte: Analysierten der gespeicherten Bezugspositionen, um die wahrscheinlichen Bezugspositionen irgendwelcher zusätlicher Zeichen einschließlich Leerstellen vorherzusagen, und Durchführen eines zweiten Zeichenerkennungsvorgangs, um, wenn möglich, die maschinekodierten Zeichen, für irgendeine vorhergesagte Speicherposition zu bestimmen, und ferner dadurch-gekennzeichnet, daß jeder Zeichenerkennungsvorgang die Schritte aufweist a) Speichern von ein in Frage kommendes Zeichen darstellen digitalisierten Daten in einer Datenspeichermatrix mit einer Speicherkapazität, die größer ist als did zum Speichern eines Zeichens erforderliche Speicherkapazität; b) Vergleichen von in einem ersten Abschnitt der Datenspeichermatrix gespeicherten digitalisierten Daten mit einer eines ersten Satzes vorgespeicherter Masken, die möglichen Zeichen entsprechen und von denen jede nicht-signifikante Elemente des entsprechenden Zeichens angeben, um Elemente der digitalisierten Daten innerhalb des ersten Abschnitts der Datenspeichermatrix zu bestimmen, die von Interesse sind; c) Vergleichen von im Schritt b) als von interesse bestimmten Elementen mit einer zugeordneten eines zweiten Satzes von vorgerspeicherten Masken, die Zeichen- und Nichtzeichenelemente darstellende digitalisierte Daten aufweisen und die entsprechend mögliche Zeichen darstellen, und Bestimmen der Anzahl von nichtpassenden Elementen; d) Speichern der Anzahl von nichtpassenden Elementen; e) Wiederholen der Schritte b) bis d) einschließlich für aufeinaderfolgende unterschiedliche Abschnitte der Datenspeichermatrix bis die Gesamtspeicherkapazität der Datenspeichermatrix abgedeckt ist; f) Wiederholen der Schritte b) bis e) einschließlich für unterschiedliche Masken bis alle vorgespeicherten Masken verwendet worden sind; ung g) Bestimmen des maschinenkodierten Zeichens durch Analysieren der gespeicherten Anzahlen nichtpassender Elemente, wobei der Schritt g) einschließt Bestimmen der niedrigsten Anzahl von für jede Maske gefundenen nichtpassenden Elementen, Bestimmen welche dieser niedrigsten Anzahlen, die Minimalzahl und die nächste sind, und Bestimmen ob die Minimalzahl geringer ist als ein erster voreingestellter Wert und ob die Differenz zwishen der Minimalzahl und der nächsten Minimalzahl einen zweiten voreingestellten Wert überschreitet, wobei jede Minimalzahl und nächste Minimalzahl einen zweier möglicher Werte abhängig davon hat, ob Schritt g) einen Teil eines ersten Zeicherkennungsvorgangs oder eines darauf durchgeführten Zeicherkennungsvorgangs bildet, die bezüglich Bezugspositionen ausgeführt werden, die als Ergebnis einer Analyse der ursprünglich gespeicherten Bezugspositionen vorhergesagt wurden.

2. Verfahren nach Anspruch 1, dadurch gekennzeichnet, daß der Schritt Analysieren der gespeicherten digitalisierten Daten die aufeinanderfolgende Prüfung unterschiedlicher Abschnitte der gespeicherten digitalisierten Daten beinhaltet, um festzustellen, ob ein vorbestestimmter Satz von Bedingungen erfüllt wird, wobei eine Bezugsposition jedesmal dann gespeichert wird, wenn der vorbestimmte Satz von Bedingungen erfüllt ist.

**Revendications**

1. Procédé pour lire et déterminer optiquement des caractères codés par machine à partir d'un document imprimé, selon lequel on analyse une zone dudit document imprimé à lire de manière à produire des données converties en numérique et on emmagasine lesdites données converties en numérique, le procédé comprenant les étapes qui consistent à analyser les données emmagasinées converties en numérique pour trouver des caractères potentiels situés dans une bande d'analyse prédéterminée, et a déterminer et ammagasiner un emplacement de référence relatif à chaque caractère potentiel trouvé, et à mettre en oeuvre un procédé de reconnaissance de caractères vis-à-vis de chacun des ces emplacements de référence afin de déterminer si possible la caractère codé par machine pour cet emplacement de référence, caractérisé par les étapes qui consistent à analyser les emplacements de référence emmagasinées pour prédire les emplacements de référence probables de tous caractères supplémentaires y compris des blancs, et à mettre en oeuvre un second procédé de reconnaissance de caractères pour déterminer si possible la caractère codé par machine pour tout emplacement d'emmagasinage qu'on a prédit, et caractérisé en outre en ce que chaque procédé de reconnaissance de caractères comprend les étapes qui consistent: a) à emmagasiner des données converties en numérique représentant un caractère potentiel dans une matrice d'ammagasinage de données ayant une capacité d'emmagasinage plus grande que la capacité d'emmagasinage requise pour emmagasiner un caractère; b) à comparer les données converties en numérique emmagasinées dans une première partie de ladite matrice d'emmagasinage de données avec un masque faisant partie d'un premier jeu des masques pré-emmagasiné qui correspondant respectivement à des caractères possibles et dont chacun est représentatif d'éléments non significatifs du caractère respectif, afin de déterminer des éléments des données converties en numérique, dans ladite

# EP 0 063 454 B1

première partie de ladite matrice d'emmagasinage de données, qui sont intéressants; c) à comparer des éléments déterminés pour être intéressants dans l'étape b) à l'un, associé, d'un second jeu de masques pré-emmagasinés, qui comprennent des données converties en numérique représentant des éléments de caractéres et des éléments étrangers aux caractères et qui représentent respectivement des caractères possibles, et à déterminer le nombre d'éléments non assortis; d) à emmagasiner le nombre d'éléments non assortis; e) à répéter les étapes b) à d) incluse pour des parties différente successives de ladite matrice d'ammagasinage de données jusqué'à ce que la capacité d'emmagasinage de ladite matrice d'emmagasinage de données ait été remplie; f) à répéter les étapes b) à e) incluse pour différents masques jusqu'à ce que le totalité des masques pré-emmagasinés ait été utilise; et g) à déterminer la caractére codé par machine par analyse des nombres emmagasinés d'éléments non assortis, l'étape g) consistant à déterminer le nombre le plus bas d'éléments non assortis trouvé pour chaque masque, à déterminer quel est, parmi ces nombres les plus bas, le nombre minimal et le nombre mininal le plus proche, et à déterminer si ledit nombre minimal est inférieur à une première valeur de préglage et si la différence entre dedit nombre minimal et ledit nombre minimal le plus proche dépasse une seconde valeur de pré-réglage, chacun dudit nombre minimal et dudit nombre. minimal le plus proche ayant l'une de deux valeurs possibles suivant que l'étape g) fait partie d'un premier procédé de reconnaissance de caractéres ou d'un procédé de reconnaissance de caractères exécute ensuite par rapport à des emplacements de référence prévus, par suite d'une analyse des emplacements de référence initialement emmagasinés.

2. Procédé selon la revendication 1, caractérisé en ce que l'étape d'analyse des données emmagasinées converties en numérique implique la surveillance successive de différente portions des données emmagasinées converties en numérique pour déceler si une série prédéterminée de conditions est satisfaite, un emplacement de référence étant emmagasiné à chaque fois que ladite série prédéterminée de conditions est satisfaite.

8

## FIG. I

## FIG. 6

EP 0 063 454 B1

# FIG. 2

| | |
|---|---|
| DATA INPUT | DIGITIZED MICR BAND ─30 |

| | |
|---|---|
| PASS I | CHARACTER FINDING ALGORITHM BY CORNER MASKS X-Y CHARACTER START CO-ORDINATES GENERATED ─35 |
| | CHARACTER RECOGNITION BY MASK MATCHING ─40 |

| | |
|---|---|
| EDITOR | MICR BAND IS REDEFINED X-Y CHARACTER START CO-ORDINATES PREDICTED ─45 |

| | |
|---|---|
| PASS 2 | CHARACTER RECOGNITION BY MASK MATCHING FROM PREDICTED X-Y CO-ORDINATES ─50 |
| | COMBINE RECOGNIZED CHARACTERS FROM PASS I AND PASS 2 ─55 |

| | |
|---|---|
| DATA OUTPUT | RECOGNIZED CHARACTER CODES OUTPUTTED AS REPRESENTED ON DOCUMENT ─60 |

2

EP 0 063 454 B1

|     | Y   | X   |
|-----|-----|-----|
| 1)  | 36  | 14  |
| 2)  | 37  | 33  |
| 3)  | 34  | 52  |
| 4)  | 38  | 73  |
| 5)  | 36  | 91  |
| 6)  | 37  | 109 |
| 7)  | 18  | 116 |
| 8)  | 36  | 128 |
| 9)  | 37  | 147 |
| 10) | 36  | 242 |
| 11) | 35  | 261 |
| 12) | 36  | 299 |

FIG. 3

|      | Y   | X   |
|------|-----|-----|
| 1    | 36  | 14  |
| 2    | 37  | 33  |
| 3    | 34  | 52  |
| 4    | 38  | 73  |
| 5    | 36  | 91  |
| 6    | 37  | 109 |
| 7    | ELIMINATED - CO - ORDINATE OUT OF BOUNDS | |
| 8    | 36  | 128 |
| 9    | 37  | 147 |
| 9a   | 36  | 166 |
| 9b   | 36  | 185 |
| 9c   | 36  | 204 |
| 9d   | 36  | 223 |
| 10   | 36  | 242 |
| 11   | 35  | 261 |
| 11a  | 36  | 280 |
| 12   | 36  | 299 |
| 12a  | 36  | 318 |
| 12b  | 36  | 337 |

FIG. 4

PREDICTED X - Y CHARACTER
START CO-ORDINATES

3

FIG. 5

L

X

A  W  :0734...0689::412 570...1  "  571."9876543210."

B  x x x x x x x x x x x x x x  x x x x x  x  x x x x x x x  x x x x x  x  x

C  :0034...0689::412 570...1  "  571."9870043210."

D  x  x  xxx xxxx  x x  x

E  0  6  6666666  65  0

Y

EP 0 063 454 B1

# FIG. 7

**X-Y CHARACTER START CO-ORDINATE**

(X) **CHARACTER FINDING CONDITIONS**

FIG. 8

DATA ABSENT
(WHITE)
DON'T CARES
(TYPICALLY AROUND
CHARACTER BOUNDARY)
DATA PRESENT
(BLACK)

AMOUNT SYMBOL     TRANSIT SYMBOL

DASH SYMBOL   .   ON-US SYMBOL

# FIG. 9

COLUMNS

ROWS

SHIFT POSITION 1
SHIFT POSITION 2
SHIFT POSITION 3

SHIFT POSITION 4
SHIFT POSITION 5
SHIFT POSITION 6

SHIFT POSITION 7
SHIFT POSITION 8
SHIFT POSITION 9

# FIG. 10

### CHARACTER MASKS (TEMPLATES)

| SHIFT POSITION | 0 | 1 | 2 | 3 | 4 | 5 | 6 | 7 | 8 | 9 | TR | AM | ON | DA |
|---|---|---|---|---|---|---|---|---|---|---|---|---|---|---|
| 1 | (2) | 52 | 46 | 56 | 55 | 56 | 39 | 39 | 34 | 49 | 46 | 53 | 55 | 46 |
| 2 | 6 | 51 | 55 | (44) | 54 | 63 | 40 | 42 | (30) | 46 | 44 | 55 | 61 | 55 |
| 3 | 8 | (42) | 56 | 63 | 63 | 71 | 41 | 52 | 36 | 51 | 50 | 57 | 64 | 58 |
| 4 | 5 | 50 | (41) | 62 | 71 | 72 | 52 | 61 | 36 | 53 | 56 | 61 | 71 | 62 |
| 5 | 10 | 46 | 61 | 69 | 75 | 69 | (38) | (34) | 38 | 62 | (39) | 63 | 56 | 61 |
| 6 | 11 | 51 | 59 | 71 | (51) | 55 | 56 | 50 | 44 | (40) | 43 | 58 | 70 | 58 |
| 7 | 12 | 60 | 63 | 73 | 56 | (46) | 61 | 49 | 98 | 61 | 55 | (47) | 64 | (44) |
| 8 | 14 | 43 | 58 | 70 | 57 | 48 | 57 | 47 | 50 | 58 | 61 | 49 | (48) | 54 |
| 9 | 16 | 44 | 60 | 65 | 62 | 51 | 55 | 44 | 51 | 54 | 64 | 52 | 51 | 46 |

| 2 | 42 | 41 | 44 | 51 | 46 | 38 | 34 | 30 | 40 | 39 | 47 | 48 | 44 |
|---|---|---|---|---|---|---|---|---|---|---|---|---|---|

MIN                                                NEXT MIN